# FASCICULE DE BREVET EUROPEEN

(11) **EP 2 675 633 B1**
(45) Date de publication et mention de la délivrance du brevet: **20.05.2015**
(21) Numéro de dépôt: 12703830.5
(22) Date de dépôt: 15.02.2012
(51) Int. Cl.: B60C 11/04

(54) **BANDE DE ROULEMENT POUR VEHICULE POIDS LOURD DE TYPE REMORQUE ET ELEMENT MOULANT**
LAUFSTREIFEN FÜR EINEN FAHRZEUGANHÄNGER UND FORMELEMENT
TREAD FOR HEAVY DUTY TRAILER LIKE VEHICLE AND MOULDING ELEMENT

(30) Priorité: 17.02.2011 FR 1151312
(43) Date de publication de la demande: 25.12.2013
(73) Titulaire: Compagnie Générale des Etablissements Michelin, 63000 Clermont-Ferrand (FR); Michelin Recherche et Technique S.A., 1763 Granges-Paccot (CH)
(72) Inventeur: FOUCHER, Benoit, F-63040 Clermont-Ferrand Cedex 9 (FR); BECHON, Hervé, F-63040 Clermont-Ferrand Cedex 9 (FR); MANSUY, Philippe, F-63040 Clermont-Ferrand Cedex 9 (FR)
(74) Mandataire: Diernaz, Christian
(86) Numéro de dépôt international: PCT/EP2012/052631
(87) Numéro de publication internationale: WO 2013/020716

(56) Documents cités:
- BE-A- 415 491
- FR-A- 1 568 434
- FR-A1- 2 940 185
- JP-A- 3 001 910

## Description

L'invention concerne les bandes de roulement des pneus pour véhicules poids lourd et plus particulièrement les véhicules poids lourd de type remorques. Elle concerne aussi les pneus pourvus avec de telles bandes.

Il est connu que l'adhérence d'un pneu sur une chaussée revêtue d'eau est fortement liée à la présence de cavités servant notamment au drainage de l'eau présente entre le pneu et la chaussée. Pour satisfaire cette exigence de performance en adhérence ou tenue de route, il est connu de réaliser, dans les bandes de roulement pour véhicules poids lourd de type remorque, un dessin de sculpture composé de nervures circonférentielles délimitant des rainures, la géométrie transversale (c'est-à-dire la géométrie vue dans un plan de coupe contenant l'axe de rotation du pneu) des rainures étant appropriée pour éviter la rétention ou le coincement de cailloux dans ces rainures et ainsi éviter une agression des fonds de rainures ainsi que de la structure de renforcement interne du pneu située radialement à l'intérieur de la bande de roulement.

De plus, il est connu que la vitesse d'usure d'une bande de roulement d'un pneumatique pour véhicule poids lourd peut être réduite lorsque cette bande de roulement est pourvue d'une sculpture compacte et la dissipation d'énergie générée au sein de cette bande de roulement est aussi réduite lorsque cette bande de roulement est pourvue d'une sculpture compacte. Par « sculpture », on entend ici la formation et l'agencement d'éléments de relief (comme des blocs ou des nervures) délimités par des rainures formées par moulage. Par -« sculpture compacte », on entend dans la présente demande une sculpture de bande de roulement ayant un pourcentage de creux volumique exprimé par rapport au volume total de gomme à user qui est faible (c'est-à-dire au plus 10 %) et en outre, une sculpture présentant une grande surface de contact avec une chaussée pendant le roulage sur cette chaussée. Cette dernière caractéristique pouvant se traduire par un pourcentage de surface de matière au sol maximale par rapport à la surface de l'aire de contact, c'est-à-dire un pourcentage au moins égal à 90 %.

Une solution, pour augmenter le taux de surface de matière en contact avec une chaussée pour une largeur de bande de roulement donnée, consiste à élargir chaque nervure axialement le plus à l'extérieur de la bande de roulement (formant ce qu'on appelle les épaules du pneu), mais il a été constaté que l'ajout de matière sur cette partie du pneu pouvait conduire à une augmentation de la température des épaules du pneu.

Une autre solution, décrite notamment dans le brevet US4703787, consiste à rendre compacte la sculpture de la bande de roulement en réduisant le taux d'entaillement surfacique à l'état neuf en remplaçant chaque rainure par une alternance d'incision orientée circonférentiellement et de cavités s'ouvrant sur la surface de roulement de la bande de roulement. Ces cavités ont en moyenne des largeurs comparables à celles des rainures qu'elles remplacent.

Document FR2940185 divulgue une bande de roulement selon la préambule de la revendication 1.

Par incision, on entend ici l'espace délimité par des parois de matière, la distance moyenne entre lesdites parois étant appropriée pour que ces parois de matière se touchent lors du roulage et qu'ainsi l'incision soit fermée. Toutefois, cette sculpture, bien que compacte, ne permet pas de prévenir l'apparition de certaines formes d'usure liée à des arrachements (en anglais « *scrubbing* »). On note aussi une augmentation de la vitesse d'usure de la bande de roulement (cette vitesse étant exprimée par le ratio entre la perte de matière et la distance parcourue) et une augmentation de la résistance au roulement, c'est-à-dire une augmentation de la quantité d'énergie dissipée en roulage.

L'objet de l'invention est de proposer une sculpture de bande de roulement qui réduit les inconvénients énoncés plus haut.

Dans ce but, il est proposé une bande de roulement pour pneu de véhicule poids lourd, cette bande de roulement ayant un volume de gomme à user en roulage et une épaisseur moyenne E mesurée à partir d'une surface de roulement à l'état neuf, cette surface de roulement étant destinée à venir en contact avec une chaussée. Cette bande de roulement comprend une pluralité d'incisions d'orientation générale circonférentielle et de largeur Li, chacune de ces incisions s'étendant dans la profondeur de la bande de roulement sur une profondeur P inférieure à l'épaisseur moyenne E de la bande, chaque incision étant prolongée radialement vers l'intérieur par un canal de largeur maximale Le supérieure à la largeur Li de l'incision et de hauteur Hc. Ce canal a des parois latérales destinées à délimiter, après usure partielle de la bande, une nouvelle rainure de largeur maximale Lc. Les parois latérales du canal se raccordent sur un fond du canal. En outre, chaque incision relie entre eux une pluralité de puits de drainage, chaque puits de drainage formé dans l'épaisseur de la bande de roulement s'ouvrant par une première ouverture sur la surface de roulement de la bande par une ouverture dont la dimension maximale est au moins égale à deux fois la largeur Li de l'incision et par une deuxième ouverture dans un canal. Cette bande de roulement est caractérisée en ce qu'il y a, pour chaque incision d'orientation générale circonférentielle, au moins un puits de drainage dans le contact pendant le roulage et en ce que, dans le prolongement de chaque puits de drainage, une protubérance est formée sur le fond du canal dans lequel s'ouvre ledit puits de drainage, cette protubérance ayant une hauteur Hp inférieure à la hauteur Hc du canal et de largeur Lp inférieure à la largeur maximale Lc dudit canal.

Chaque puits de drainage de liquide sert également de canal de ventilation mettant en relation l'intérieur de la bande de roulement avec l'extérieur.

Le dessin de sculpture, pour pneu d'un véhicule de type remorque, est préférentiellement dépourvu de toute rainure débouchant à l'état neuf sur la surface de roulement afin d'avoir une sculpture la plus compacte possible. Par rainure, on entend un espace ménagé par moulage dans la bande de roulement, cet espace ayant une profondeur au moins égale à 75% de l'épaisseur de la bande (les parois en vis-à-vis délimitant une telle rainure sont distantes l'une de l'autre de manière à ne pas permettre leur mise en contact dans les conditions d'usage).

La profondeur Hi de l'incision est au moins 20% et au plus 70% de l'épaisseur E de la bande de roulement.

Chaque protubérance formée sur le fond d'un canal peut être continue ou discontinue.

Préférentiellement, chaque première ouverture de chaque puits de drainage est de forme circulaire sur la surface de roulement, de diamètre au moins égal à au moins cinq fois la largeur Li de l'incision reliant lesdits puits de drainage.

Préférentiellement, chaque puits de drainage est de forme tronconique, le diamètre de la première ouverture sur la surface de roulement à l'état neuf étant supérieur au diamètre de la deuxième ouverture s'ouvrant dans un canal.

Dans une variante préférentielle, chaque incision, vue en coupe transversale, a une forme en zigzag ou une forme ondulée dans la profondeur de la bande de roulement de manière à empêcher ou à tout le moins réduire le plus possible toute pénétration de cailloux dans ladite incision jusqu'au canal sous jacent.

Avantageusement, la protubérance formée dans chaque canal est formée pour être discontinue circonférentiellement, chaque protubérance étant prévue pour être située radialement sous un puits de sorte que tout objet pénétrant dans la bande par un puits ne puisse atteindre le canal sous jacent.

Dans une variante de l'invention, chaque puits a une forme tronconique. Préférentiellement, la section du puits de forme tronconique va en augmentant en se rapprochant de la surface de roulement à l'état neuf de la bande.

Selon une autre variante de l'invention, la longueur de chaque protubérance est sensiblement égale à la moitié de la distance entre chaque puits.

Préférentiellement, la hauteur Hp de chaque protubérance formée dans un canal est au moins égale à 20% de la hauteur du canal.

Encore plus préférentiellement, la hauteur (Hp) de chaque protubérance (7) est au plus égale à 80% de la hauteur (Hc) du canal (5).

Préférentiellement, la largeur Lp de chaque protubérance est au moins 20% et au plus 80% de la largeur Lc dudit canal.

Il est préférable de disposer chaque protubérance sur le fond du canal (correspondant à la partie délimitant ledit canal la plus éloignée de la surface de roulement à l'état neuf) plutôt que sur les parois latérales délimitant ledit canal afin de protéger plus efficacement ledit fond.

L'invention concerne également un pneu pourvu d'une bande de roulement comprenant au moins une incision telle que décrite, ce pneu étant spécifiquement destiné à équiper un véhicule poids lourd de type remorque.

On a pu constater lors de tests que cette sculpture présentait de plus un bruit réduit en roulage.

L'invention concerne en outre un élément d'un moule pour mouler une incision dans une bande de roulement pour pneu de véhicule poids lourd, cet élément comprenant une pluralité de lames réunies entre elles de façon à pouvoir mouler une incision, chaque lame présentant une géométrie en zigzag selon la direction de la hauteur de l'élément, c'est-à-dire dans la direction qui est destinée à devenir la direction de l'épaisseur d'une bande moulée dans un moule pourvu avec cet élément de moule, ces lames étant reliées entre elles par des plots, ces lames et ces plots étant réunis par un bourrelet continu, destiné au moulage d'un canal dans une bande de roulement moulée dans un moule pourvu avec cet élément de moule, cet élément de moule étant tel que le bourrelet continu est pourvu sur sa partie la plus éloignée des lames avec au moins une cavité destinée chacune à mouler une protubérance dans le fond du canal moulé par ledit bourrelet continu dans une bande de roulement moulée dans un moule pourvu avec cet élément de moule, au moins une cavité étant formée pour être centrée sur chaque plot.

Avantageusement, chaque plot est de forme tronconique de section circulaire, la section de plus grand diamètre de ces plots étant destinée à mouler un orifice circulaire sur la surface de roulement de la bande.

D'autres caractéristiques et avantages de l'invention ressortent de la description faite ci-après en référence aux dessins annexés qui montrent, à titre d'exemple non limitatif, une forme de réalisation de l'objet de l'invention.
La figure 1 montre une vue d'une partie de la surface de roulement d'une bande de roulement selon l'invention ;
La figure 2 montre en coupe la bande de roulement de la figure 1, cette coupe étant prise selon un plan dont la trace est représentée par la ligne II-II sur la figure 1 ;
La figure 3 montre une vue en coupe dans l'épaisseur de la bande de roulement de la figure 1, cette coupe étant prise selon un plan dont la trace est représentée par la ligne III-III sur la figure 1 ;
La figure 4 montre une vue en coupe dans l'épaisseur de la bande de roulement de la figure 1, cette coupe étant prise selon un plan dont la trace est représentée par la ligne IV-IV sur la figure 1, ce plan de coupe ne coupant pas de protubérance,
La figure 5 montre une partie d'un élément de moule employé pour mouler une incision telle que montrée avec les figures 1 à 3 ;
La figure 6 montre selon une autre perspective le même élément de moule que celui déjà montré avec la figure 5 ;
La figure 7 montre une variante de forme de puits de drainage.

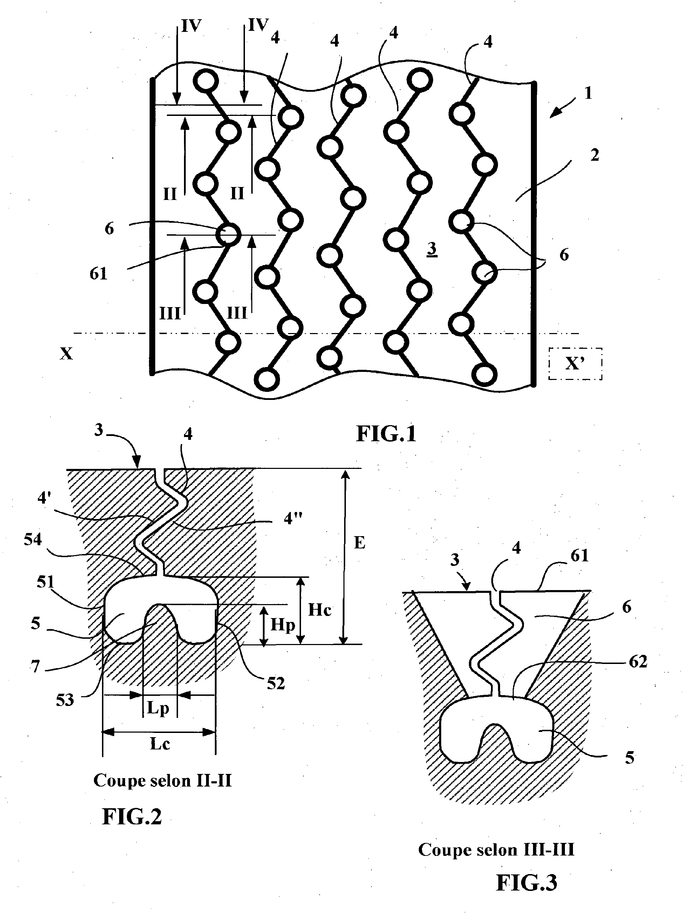

La figure 1 montre une partie de la surface de roulement d'une bande de roulement d'un pneu 1 de dimension 385/55 R 22.5 destiné à équiper un véhicule poids lourd de type remorque. Ce pneu 1 comporte une bande de roulement 2 selon l'invention ayant une épaisseur E de matière à user égale à 13.5 mm (cette épaisseur E correspond à une limite au-delà de laquelle il devient nécessaire de renouveler la bande de roulement ou de changer de pneu. Sur cette figure 1, on voit que la bande de roulement 2 a une surface de roulement 3 destinée à venir en contact avec une route lors du roulage. La surface de roulement 3 de cette bande de roulement 2 a une largeur TW égale à 330 mm, correspondant à la largeur maximale de contact mesurée dans la direction transversale (c'est-à-dire dans une direction XX' parallèle à l'axe de rotation du pneu) pour des conditions d'usage du pneu. On voit que cette bande de roulement comprend cinq incisions 4 ayant chacune un tracé en zigzag sur la surface de roulement 3 et d'orientation générale circonférentielle pour faire chacune le tour complet du pneu dans la direction circonférentielle.

Chacune de ces incisions 4, de largeur moyenne égale à 0.4 mm et de profondeur maximale égale à 8.5 mm, suit en outre une géométrie en zigzag dans la direction de l'épaisseur de la bande, comme cela est visible sur la figure 2. Chaque incision 4 est communicante avec un canal 5 sous jacent formé à l'intérieur de la bande et destiné à former une nouvelle rainure après usure partielle d'une épaisseur de bande de roulement égale à la profondeur de ladite incision. Ces incisions 4 sont disposées de manière à diviser la largeur de la bande en six régions ayant toutes sensiblement une même dimension transversale.

Ce canal 5, visible en coupe sur la figure 2, a une hauteur Hc égale à 5 mm dans sa partie la plus haute et une largeur maximale Lc égale à 8 mm. Ce canal 5 est formé en totalité à l'intérieur de la bande et suit le tracé de l'incision d'orientation générale circonférentielle.

En outre, cette bande de roulement 2 est pourvue avec une pluralité de puits de drainage 6 d'orientation radiale, c'est-à-dire orienté chacun selon une direction coupant l'axe de rotation, s'ouvrant par une extrémité sur la surface de roulement. Ces puits de drainage 6 sont disposés sur les pointes et les creux des tracés en zigzag formés par les incisions sur la surface de roulement. Une première ouverture 61 de chaque puits de drainage 6 a, sur la surface de roulement 3 à l'état neuf, une section de forme circulaire ayant un diamètre égal à 12 mm. La distance moyenne dans la direction circonférentielle entre deux puits de drainage 6 sur une même incision 4 est égale à 25 mm de manière à ce qu'il y ait en permanence au moins un et de préférence au moins deux puits de drainage 6 pour chaque incision 4 dans la zone de contact avec une route.

Chaque puits de drainage 6 a dans le cas d'espèce une forme tronconique dans l'épaisseur de la bande de roulement et présente une section transversale qui va en diminuant en partant de la surface de roulement 3 et en allant dans la direction de l'épaisseur de la bande comme le montre la figure 3. Chaque puits de drainage 6 s'ouvre par une deuxième ouverture 62 de forme circulaire et de diamètre égal à 5 mm dans un canal 5.

Avec l'ensemble de ces incisions 4, puits de drainage 6 et canaux 5 sous jacents à la surface de roulement à l'état neuf, la bande de roulement 2 selon l'invention a un volume total de creux utile pour drainer un liquide présent sur une chaussée qui, lorsqu'il est rapporté au volume total de matière à user de la bande de roulement, est particulièrement petit puisqu'il est égal dans le cas présent égal à 7% (ce ratio est très inférieur aux ratios usuels de pneus du marché qui sont égaux ou proches de 15%). Grâce à un tel ratio et à un dessin de sculpture selon l'invention, il est possible, tout en respectant les conditions de sécurité en roulage, de mettre davantage de matière en contact avec une chaussée et ainsi d'augmenter le potentiel du pneu en usure notamment.

La figure 2 montre en coupe une partie de la bande de roulement 2 du pneu de la figure 1, cette coupe étant prise selon un plan radial dont la trace est représentée par la ligne II-II sur la figure 1 (un plan radial est un plan contenant l'axe de rotation du pneu) pour être située entre deux puits de drainage. Sur cette figure 2, on voit en coupe l'épaisseur E de la bande 2 qui peut être usée en roulage. Dans cette épaisseur, on voit une incision 4 s'ouvrant sur la surface de roulement 3, cette incision 4 étant formée pour avoir, dans la direction de l'épaisseur, un tracé en zigzag de manière à réaliser un blocage mécanique des parois 4', 4" en vis-à-vis délimitant cette incision. Ce tracé en zigzag selon l'épaisseur est combiné au tracé en zigzag dans la direction circonférentielle, ce qui accroît encore le blocage mécanique des parois 4', 4" en vis-à-vis de l'incision 4. Cette incision 4 se raccorde à un canal 5 d'orientation circonférentielle ayant des parois latérales 51, 52 destinées à devenir des parois d'une nouvelle rainure après que l'usure de la bande soit au moins égale à la profondeur Hi de l'incision. Ce même canal 5 comprend une partie radialement à l'extérieur 54 et une partie radialement à l'intérieur formant un fond 53, ce fond du canal étant prévu pour correspondre sensiblement la limite d'usure de la bande 2 (ceci signifie en conséquence qu'il est à une distance égale à l'épaisseur E par rapport à la surface de roulement 3 à l'état neuf).

Sur ce fond 53 du canal 5, on voit en coupe une protubérance 7 centrée transversalement sur ce fond et ayant une largeur maximale Lp égale à 2.5 mm et une hauteur maximale Hp égale à 3 mm, cette hauteur étant mesurée à partir du fond 53. Dans le cas présenté, chaque canal 5 comprend sur son fond 53 une pluralité de protubérances 7 ayant toutes les mêmes dimensions, ces protubérances 7 étant positionnées de manière à être dans le prolongement de chaque puits de drainage 6 et espacées entre elles d'une distance inférieure à la distance moyenne entre deux puits de drainage 6 successifs d'une même incision 4.

La figure 3 montre une vue en coupe dans l'épaisseur de la bande de roulement de la figure 1, cette coupe étant prise selon un plan dont la trace est représentée par la ligne III-III sur la figure 1. Sur cette coupe prise au droit d'un puits de drainage 6, on voit que ce puits a une forme de section se réduisant en allant de la surface de roulement 3 à l'état initial jusqu'au canal 5 auquel ce puits de drainage 6 se raccorde par sa deuxième ouverture 62.

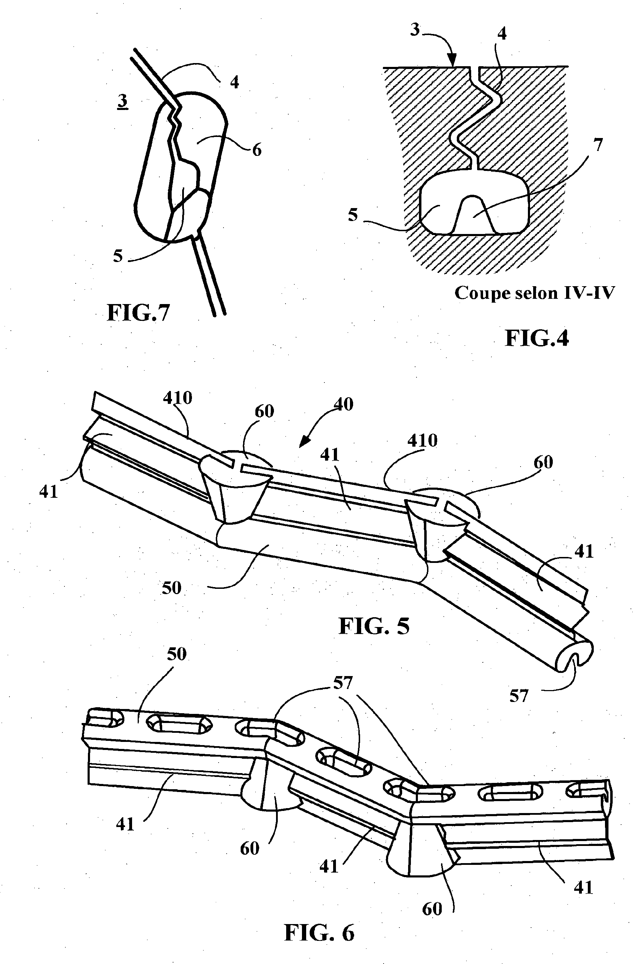

La figure 4 montre une vue en coupe dans l'épaisseur de la bande de roulement de la figure 1, cette coupe étant prise selon un plan dont la trace est représentée par la ligne IV-IV sur la figure 1. Cette coupe concerne une région de discontinuité des protubérances 7 formées sur le fond du canal 5.

La figure 5 montre une partie d'un élément de moule 40 employé pour mouler une incision 4 prolongée par un canal 5 et pourvue d'une pluralité de puits de drainage 6, cette incision correspondant à l'incision telle que montrée et décrite avec le support des figures 1 à 3.

Cet élément de moule 40 comprend une pluralité de lames 41 rectilignes réunies entre elles de façon à pouvoir mouler une incision dont la géométrie est en forme de zigzag dans la direction principale de l'incision (c'est-à-dire dans la direction de la trace sur la surface de roulement de la bande de roulement pourvue avec cette incision). Un angle différent de 180 degrés est formé entre deux lames 41 rectilignes consécutives. Ces lames 41 comportent une partie 410 destinée à être fixée dans un moule pour le moulage d'une bande de roulement selon l'invention.

Par ailleurs, chaque lame 41 présente une géométrie en zigzag selon la direction de là hauteur de l'élément, c'est-à-dire dans la direction qui est destinée à devenir la direction de l'épaisseur d'une bande moulée dans un moule pourvu avec cet élément de moule. Ces lames 41 sont reliées entre elles par des plots tronconiques 60 de section circulaire, la section de plus grand diamètre, destinée à mouler un orifice circulaire sur la surface de roulement de la bande, étant disposée du même côté que les parties 410 des lames 41 destinées à être fixées à un moule. En outre, un bourrelet continu 50, destiné au moulage d'un canal, est formé pour relier entre eux les lames rectilignes 41 et les plots tronconiques 60 du côté de leur section la plus étroite, ce bourrelet continu 50 étant formé pour suivre le tracé en zigzag que forment entre elles les lames 41.

La figure 6 montre selon une autre perspective le même élément de moule 40 que celui déjà montré avec la figure 5. On voit que le bourrelet continu 50 est pourvu avec une pluralité de cavités 57 destinées chacune à mouler une protubérance dans le fond du canal moulé par ledit bourrelet continu (ces protubérances correspondent aux protubérances 7 telles que montrées avec le support des figures 2 et 3). Ces cavités 57 sont centrées sur les plots tronconiques 60 et espacées les unes des autres d'une distance appropriée.

La figure 7 montre une variante de puits de drainage 6 ayant en surface de roulement 3 une forme allongée dans la direction de l'incision 4 sur ladite surface. La largeur de ce puits est au moins égale à au moins cinq fois la largeur de l'incision 4. On distingue sur cette figure 7, le canal 5 sous-jacent à la surface de roulement et débouchant dans le puits de drainage.

L'invention n'est pas limitée aux exemples décrits et représentés et diverses modifications peuvent y être apportées sans sortir de son cadre tel que défini dans les revendications ci-jointes. Notamment, il est possible de former dans chaque canal une seule protubérance continue circonférentiellement et faisant le tour complet du pneu. Il est en outre possible de former toute autre forme d'incisions ou de puits de drainage dès lors que des moyens de blocage sont réalisés sur les parois des incisions pour réduire autant que faire se peut les mouvements relatifs entre ces parois.

La variante ici décrite montre des incisions ayant des formes en zigzag sur la surface de roulement, mais il est possible à la personne du métier de déterminer, selon la destination du pneu, une autre forme ou des formes différentes pour chaque incision.

Il est également possible d'ajouter sur la bande de roulement à l'état neuf en plus des incisions telles qu'elles ont été décrites des rainures qu'elles soient d'orientation circonférentielle ou/et transversale, ces dernières étant formées sur les parties de bord de la bande.

## Revendications

1. Bande de roulement (2) pour pneu (1) de véhicule poids lourd, cette bande de roulement (2) ayant un volume de gomme à user en roulage et une épaisseur moyenne E mesurée à partir d'une surface de roulement (3) à l'état neuf, cette surface de roulement (3) étant destinée à venir en contact avec une chaussée, cette bande de roulement (2) comprenant une pluralité d'incisions (4) d'orientation générale circonférentielle et de largeur (Li), chacune de ces incisions s'étendant dans la profondeur de la bande de roulement sur une profondeur (P) inférieure à l'épaisseur moyenne E de la bande, chaque incision (4) étant prolongée radialement vers l'intérieur par un canal (5) de largeur maximale (Lc) supérieure à la largeur (Li) de l'incision et de hauteur (Hc), ce canal (5) ayant des parois latérales (51, 52) destinées à délimiter, après usure partielle de la bande, une nouvelle rainure de largeur maximale (Lc), ces parois latérales (51, 52) se raccordant sur un fond (53) du canal (5), chaque incision reliant entre eux une pluralité de puits de drainage (6), chaque puits de drainage (6) formé dans l'épaisseur de la bande de roulement s'ouvrant par une première ouverture (61) sur la surface de roulement (3) de la bande par une ouverture dont la dimension maximale est au moins égale à deux fois la largeur (Li) de l'incision (4) et par une deuxième ouverture (62) dans ledit canal (5), cette bande de roulement (2) étant **caractérisée en ce qu'**il y a, pour chaque incision (4) d'orientation générale circonférentielle, au moins un puits de drainage (6) dans le contact pendant le roulage et **en ce que**, dans le prolongement de chaque puits de drainage (6), une protubérance (7) est formée sur le fond (53) du canal (5) dans lequel s'ouvre ledit puits de drainage (6), cette protubérance (7) ayant une hauteur (Hp) inférieure à la hauteur (Hc) du canal (5) et de largeur (Lp) inférieure à la largeur maximale (Le) dudit canal (5).

2. Bande de roulement (2) selon la revendication 1 **caractérisée en ce que** chaque première ouverture (61) de chaque puits de drainage (6) est de forme circulaire sur la surface de roulement (3), de diamètre au moins égal à au moins cinq fois la largeur (Li) de l'incision (4) reliant lesdits puits de drainage (6).

3. Bande de roulement (2) selon la revendication 1 ou la revendication 2 **caractérisée en ce que** chaque puits de drainage (6) est de forme tronconique, le diamètre de la première ouverture (61) sur la surface de roulement (3) à l'état neuf étant supérieur au diamètre de la deuxième ouverture (62) s'ouvrant dans un canal (5).

4. Bande de roulement (2) selon l'une des revendications 1 à 3 **caractérisée en ce que** la hauteur (Hp) de chaque protubérance (7) formée dans un canal (5) est au moins égale à 20% de la hauteur du canal.

5. Bande de roulement (2) selon la revendication 4 **caractérisée en ce que** la hauteur (Hp) de chaque protubérance (7) est au plus égale à 80% de la hauteur (Hc) du canal (5).

6. Pneu pourvu d'une bande de roulement selon l'une des revendications 1 à 5 **caractérisée en ce que** ce pneu est destiné à équiper un véhicule poids lourd de type remorque.

7. Élément d'un moule (40) pour mouler une incision dans une bande de roulement pour pneu de véhicule poids lourd, cet élément comprenant une pluralité de lames (41) réunies entre elles de façon à pouvoir mouler une incision, chaque lame (41) présentant une géométrie en zigzag selon la direction de la hauteur de l'élément, c'est-à-dire dans la direction qui est destinée à devenir la direction de l'épaisseur d'une bande moulée dans un moule pourvu avec cet élément de moule, ces lames (41) étant reliées entre elles par des plots (60), ces lames (41) et ces plots (60) étant réunis par un bourrelet continu (50), destiné au moulage d'un canal dans une bande de roulement moulée dans un moule pourvu avec cet élément de moule, cet élément de moule étant **caractérisé en ce que** le bourrelet continu (50) est pourvu sur sa partie la plus éloignée des lames avec au moins une cavité (57) destinée à mouler une protubérance dans le fond du canal moulé par ledit bourrelet continu dans une bande de roulement moulée dans un moule pourvu avec cet élément de moule, au moins une cavité étant formée pour être centrée sur chaque plot (60).

8. Élément d'un moule (40) selon la revendication 7 **caractérisé en ce que** chaque plot (60) est de forme tronconique de section circulaire, la section de plus grand diamètre de ces plots (60) étant destinée à mouler un orifice circulaire sur la surface de roulement de la bande.

## Patentansprüche

1. Laufstreifen (2) für einen Reifen (1) eines Schwerlastfahrzeugs, wobei dieser Laufstreifen (2) ein beim Fahren zu verwendendes Gummivolumen und eine von einer Lauffläche (3) im neuen Zustand aus gemessene mittlere Dicke E aufweist, wobei diese Lauffläche (3) dazu bestimmt ist, mit einer Fahrbahn in Kontakt zu kommen, wobei dieser Laufstreifen (2) mehrere im Wesentlichen in Umfangsrichtung ausgerichtete Einschnitte (4) mit einer Breite (Li) aufweist, wobei sich jeder dieser Einschnitte in der Tiefe des Laufstreifens über eine Tiefe (P) erstreckt, die kleiner als die mittlere Dicke E des Streifens ist, wobei jeder Einschnitt (4) durch einen Kanal (5) mit einer maximalen Breite (Lc), die größer als die Breite (Li) des Einschnitts ist, und einer Höhe (Hc) radial nach innen verlängert ist, wobei dieser Kanal (5) Seitenwände (51, 52) aufweist, die dazu bestimmt sind, nach teilweisem Verschleiß des Streifens eine neue Rille mit einer maximalen Breite (Lc) zu begrenzen, wobei diese Seitenwände (51, 52) sich an einen Boden (53) des Kanals (5) anschließen, wobei jeder Einschnitt mehrere Ablauflöcher (6) miteinander verbindet, wobei jedes in der Dicke des Laufstreifens ausgebildete Ablaufloch (6) sich über eine erste Öffnung (61) auf der Lauffläche (3) des Streifens durch eine Öffnung, deren maximale Abmessung mindestens gleich dem Zweifachen der Breite (Li) des Einschnitts (4) ist, und über eine zweite Öffnung (62) in den Kanal (5) öffnet, wobei dieser Laufstreifen (2) **dadurch gekennzeichnet ist, dass** für jeden im Wesentlichen in Umfangsrichtung ausgerichteten Einschnitt (4) mindestens ein Ablaufloch (6) vorhanden ist, das sich während des Fahrens im Kontakt befindet, und dadurch, dass in der Verlängerung jedes Ablaufloches (6) ein Vorsprung (7) auf dem Boden (53) des Kanals (5), in den sich das Ablaufloch (6) öffnet, ausgebildet ist, wobei dieser Vorsprung (7) eine Höhe (Hp), die kleiner als die Höhe (Hc) des Kanals (5) ist, und eine Breite (Lp), die kleiner als die maximale Breite (Lc) des Kanals (5) ist, aufweist.

2. Laufstreifen (2) nach Anspruch 1, **dadurch gekennzeichnet, dass** jede erste Öffnung (61) jedes Ablaufloches (6) kreisförmig auf der Lauffläche (3) ist, mit einem Durchmesser, der mindestens gleich dem Fünffachen der Breite (Li) des Einschnitts (4) ist, der die Ablauflöcher (6) verbindet.

3. Laufstreifen (2) nach Anspruch 1 oder Anspruch 2, **dadurch gekennzeichnet, dass** jedes Ablaufloch (6) kegelstumpfförmig ist, wobei der Durchmesser der ersten Öffnung (61) auf der Lauffläche (3) im neuen Zustand größer als der Durchmesser der zweiten Öffnung (62) ist, die sich in einen Kanal (5) öffnet.

4. Laufstreifen (2) nach einem der Ansprüche 1 bis 3, **dadurch gekennzeichnet, dass** die Höhe (Hp) jedes Vorsprungs (7), der in einem Kanal (5) ausgebildet ist, mindestens gleich 20% der Höhe des Kanals ist.

5. Laufstreifen (2) nach Anspruch 4, **dadurch gekennzeichnet, dass** die Höhe (Hp) jedes Vorsprungs (7) höchstes gleich 80% der Höhe (Hc) des Kanals (5) ist.

6. Reifen, der mit einem Laufstreifen nach einem der Ansprüche 1 bis 5 versehen ist, **dadurch gekennzeichnet, dass** dieser Reifen zur Ausrüstung eines Schwerlastfahrzeugs vom Typ eines Anhängers bestimmt ist.

7. Element einer Form (40) zum Formen eines Einschnitts in einem Laufstreifen für einen Reifen eines Schwerlastfahrzeugs, wobei dieses Element mehrere Messer (41) aufweist, die miteinander vereinigt sind, derart, dass sie einen Einschnitt formen können, wobei jedes Messer (41) eine zickzackförmige Geometrie entlang der Richtung der Höhe des Elements aufweist, das heißt in der Richtung, welche dazu bestimmt ist, die Richtung der Dicke eines Streifens zu werden, der in einer mit diesem Formelement versehenen Form geformt wird, wobei diese Messer (41) durch Kontaktstücke (60) miteinander verbunden sind, wobei diese Messer (41) und diese Kontaktstücke (60) durch einen durchgehenden Wulst (50) vereinigt sind, der zum Formen eines Kanals in einem Laufstreifen bestimmt ist, der in einer mit diesem Formelement versehenen Form geformt wird, wobei dieses Formelement **dadurch gekennzeichnet ist, dass** der durchgehende Wulst (50) auf seinem am weitesten von den Messern entfernten Teil mit mindestens einem Hohlraum (57) versehen ist, der dazu bestimmt ist, einen Vorsprung in dem Boden des Kanals zu formen, der durch den durchgehenden Wulst in einem Laufstreifen geformt wird, der in einer mit diesem Formelement versehenen Form geformt wird, wobei mindestens ein Hohlraum so geformt ist, dass er auf jedem Kontaktstück (60) zentriert ist.

8. Element einer Form (40) nach Anspruch 7, **dadurch gekennzeichnet, dass** jedes Kontaktstück (60) kegelstumpfförmig mit kreisförmigem Querschnitt ist, wobei der Querschnitt mit dem größten Durchmesser dieser Kontaktstücke (60) dazu bestimmt ist, eine kreisförmige Öffnung auf der Lauffläche des Streifens zu formen.

## Claims

1. Tread (2) for a tyre (1) of a heavy vehicle, this tread (2) having a volume of rubber to be worn away during running and a mean thickness E measured from a tread surface (3) in the new state, this tread surface (3) being intended to come into contact with a roadway, this tread (2) comprising a plurality of sipes (4) of circumferential overall orientation and of width (Li), each of these sipes extending into the depth of the tread over a depth (P) that is less than the mean thickness E of the tread, each sipe (4) being extended radially inwards by a channel (5) of maximum width (Lc) that is greater than the width (Li) of the incision and of height (Hc), this channel (5) having lateral walls (51, 52) that are intended, when the tread has become partially worn, to delimit a new groove of maximum width (Lc), these lateral walls (51, 52) connecting to a bottom (53) of the channel (5), each sipe connecting together a plurality of drainage wells (6), each drainage well (6) formed in the thickness of the tread opening via a first opening (61) onto the tread surface (3) via an opening the maximum dimension of which is at least equal to twice the width (Li) of the sipe (4) and via a second opening (62) into the said channel (5), this tread (2) being **characterized in that** there is, for each sipe (4) of circumferential overall orientation, at least one drainage well (6) in the contact patch during running and **in that**, in the continuation of each drainage well (6), a protrusion (7) is formed on the bottom (53) of the channel (5) into which the said drainage well (6) opens, this protrusion (7) having a height (Hp) that is less than the height (Hc) of the channel (5) and a width (Lp) that is less than the maximum width (Lc) of the said channel (5).

2. Tread (2) according to Claim 1, **characterized in that** each first opening (61) of each drainage well (6) is of circular shape on the tread surface (3), with a diameter at least equal to at least five times the width (Li) of the sipe (4) connecting the said drainage wells (6).

3. Tread (2) according to Claim 1 or Claim 2, **characterized in that** each drainage well (6) is of frustoconical shape, the diameter of the first opening (61) on the tread surface (3) in the new state being greater than the diameter of the second opening (62) opening into a channel (5).

4. Tread (2) according to one of Claims 1 to 3, **characterized in that** the height (Hp) of each protrusion (7) formed in a channel (5) is at least equal to 20% of the height of the channel.

5. Tread (2) according to Claim 4, **characterized in that** the height (Hp) of each protrusion (7) is at most equal to 80% of the height (Hc) of the channel (5).

6. Tyre provided with a tread according to one of Claims 1 to 5, **characterized in that** this tyre is intended to be fitted to a heavy vehicle of the trailer type.

7. Mould element (40) for moulding a sipe in a tread for a tyre of a heavy vehicle, this element comprising a plurality of blades (41) joined together in such a way as to be able to mould a sipe, each blade (41) having a zigzag geometry in the direction of the height of the element, i.e. in the direction intended to become the direction of the thickness of a tread moulded in a mould provided with this mould element, these blades (41) being joined together by pins (60), these blades (41) and these pins (60) being connected by a continuous bead (50) intended to mould a channel in a tread moulded in a mould provided with this mould element, this mould element being **characterized in that** the continuous bead (50) is provided on its part furthest away from the blades with at least one cavity (57) intended to mould a protrusion in the bottom of the channel moulded by the said continuous bead in a tread moulded in a mould provided with this mould element, at least one cavity being formed so as to be centred on each pin (60).

8. Mould element (40) according to Claim 7, **characterized in that** each pin (60) is of frustoconical shape of circular section, the largest-diameter section of these pins (60) being intended to mould a circular orifice on the tread surface.
